# EUROPEAN PATENT SPECIFICATION

(11) **EP 4 114 682 B1**
(45) Date of publication and mention of the grant of the patent: **01.07.2026**
(21) Application number: 21711328.1
(22) Date of filing: 04.03.2021
(51) Int. Cl.: B60L 53/30, B60L 53/35, B60L 53/66

(54) **VEHICLE CHARGING**
FAHRZEUGAUFLADUNG
CHARGE DE VÉHICULE

(30) Priority: 05.03.2020 GB 202003230
(43) Date of publication of application: 11.01.2023
(73) Proprietor: Q-Free ASA, 7443 Trondheim (NO)
(72) Inventor: BLEKKEN, Brage, 7443 Trondheim (NO); LYKKJA, Ola Martin, 7443 Trondheim (NO)
(74) Representative: Dehns
(86) International application number: PCT/GB2021/050541
(87) International publication number: WO 2021/176223

(56) References cited:
- EP-A1- 2 541 730
- WO-A2-2011/139680

## Description

This invention relates to controlling the charging of a vehicle at a charging station.

In light of the increased awareness of dwindling natural resources such as fossil fuels and the significant contribution of combustion of such resources to global warming, many governments and companies are looking to alternative source of power. Whilst many road vehicles (e.g. cars, motorcycles, lorries) are traditionally powered by the combustion of fossil fuels, vehicles adapted to use electrical power ('electric vehicles') are becoming an increasingly viable option for transportation and as such are becoming used more widely across the world.

The increasing number of electric vehicle presents new problems, such as providing sufficient facilities for providing electrical power to a vehicle to recharge the batteries of the vehicle. Whilst electric charging stations are becoming more widely available, for example at office complexes and service stations, charging the batteries of an electric vehicle currently takes significantly longer than the traditional refuelling of a car using a fossil fuel. Therefore, once a vehicle is connected to an electric charging device at a charging station, the vehicle may need to remain connected to the charging station for a significant period of time (e.g. several hours) to be suitably recharged. Charging stations may also be occupied by vehicles that are not being charged (e.g. the vehicles are simply parked) and/or cannot be charged (e.g. petrol or diesel vehicles or those not supporting the charging technology used by the charging station). This may lead to difficulties for users of electric vehicle being able to access a charging device, especially in combination with the limited numbers of electric charging stations. These problems may discourage the use of electric vehicles.

WO 2011/139680 A2 discloses a charging station which has a charging device, sensors for detecting the presence of a vehicle, and a communication system between the vehicle and the charging station arranged to identify a vehicle when it is in close proximity to the station.

An aim of the present invention is to provide a more efficient mechanism for enabling users to access a charging device at a charging station.

When viewed from a first aspect, the present invention provides a method of controlling charging of a vehicle at a charging station as claimed in claim 8.

When viewed from a second aspect, the present invention provides a charging station for controlling charging of a vehicle as claimed in claim 1.

When viewed from a third aspect the present invention provides a charging system for controlling the charging of a vehicle as claimed in claim 15.

Thus it will be seen by those skilled in the art that in accordance with the present invention it can be determined whether a vehicle is present in, for example, a parking space associated with a charging device and whether the detected vehicle is authorised to use the charging device. When the vehicle is authorised to use the charging device (i.e. if the authorisation status is positive), electrical power is supplied from the charging device to the vehicle. This may encourage the use only of a charging station that the vehicle has been authorised to use, as otherwise the vehicle may not be supplied with electrical power (e.g. to charge the battery of the vehicle). This may in turn enable charging stations to be allocated between vehicles more efficiently e.g. through prior reservation and so enable users of vehicles improved access to charging stations. Users may thus gain more confidence as to the availability of a charging station for their vehicle before they set out, as the invention may facilitate an effective mechanism for reserving a charging station.

Preferably, the predetermined area in the vicinity of the charging device is a parking space associated with the charging device.

There are a number of ways of determining presence of a vehicle in a predetermined area. In accordance with the invention one or more sensors are arranged to detect presence of a vehicle in a predetermined area in a vicinity of the charging device. In a set of embodiments, a dedicated sensor is provided. In a set of such embodiments the one or more sensors comprises a ground-based sensor. For example, the sensor may be installed flush with the surface of the ground (e.g. of a road) forming part of the predetermined area. The ground-based sensor may be arranged to detect the presence of a vehicle above the sensor and therefore detect the presence of a vehicle in the vicinity of the charging device. This may reduce the amount of infrastructure required around and/or above the charging station.

Presence of a vehicle may be detected in any suitable and desirable manner using a dedicated sensor. In a set of embodiments, the sensor comprises a magnetometer. The magnetometer may be arranged to detect a change in the magnetic field caused by a vehicle. Magnetometers are less affected by weather conditions (e.g. ice and snow) than other forms of sensors, therefore may help to provide a more reliable detection of the presence of a vehicle.

In a set of embodiments, the presence of a vehicle is detected using radar. The radar may be ultra-wide band radar. For example, the sensor may comprise a radar transmitter and receiver. The radar sensor may transmit a radar signal which is reflected and detected by the receiver when a vehicle is presence (e.g. above the sensor).

Any suitable and desirable communication technology may be used to disseminate the vehicle presence status such as NarrowBand Internet-of-Things (IoT), standardised or proprietary protocols in licensed or unlicensed frequency bands. However, in embodiments where radar (e.g. ultra-wide band) is used to communicate the detection of the presence of a vehicle, detecting the presence of a vehicle using radar helps to decrease the number of components required in the sensors, thereby helping simplify the structure of the sensor.

One example of a suitable sensor is the Q-Free Smart Parking Sensor ITS-420 ^{™}.

In other embodiments the one or more sensors comprise a camera arranged to determine presence in conjunction with image recognition.

In accordance with the invention, the charging station is arranged to acquire information for identifying the vehicle from a signal received in response to at least one of the polling signals. In a set of embodiments, the charging station comprises a further mechanism for identifying vehicles. The further mechanism may be arranged to acquire information identifying a vehicle in any suitable and desirable way. In a set of embodiments, said further mechanism comprises a camera for acquiring information for identifying the vehicle. This could be a dedicated camera but in embodiments where a camera is used as a sensor for presence detection, preferably the same one is used for acquiring identifying information.

The camera may be used to obtain an image of a vehicle in the predetermined area in the vicinity of the charging device. In a set of embodiments, the information for identifying the vehicle comprises a license plate number (e.g. acquired from an image obtained by the camera). For example, image processing may be performed on an image of the vehicle to extract the license plate number e.g. using an automated license plate recognition (ALPR) algorithm. As license plate numbers are unique, acquiring the license plate number of a vehicle enables a unique identification of the vehicle. Whilst the camera may be arranged to transmit the image to an external server which may process the image to determine the license plate number and optionally verify additional information relating to the vehicle (e.g. model, age, user, tax registration), preferably the camera comprises a processor arranged to execute an ALPR algorithm to process the image to determine the license plate number. The license plate number identified from the image may then simply be matched with a reservation record in an authorisation server or elsewhere.

In accordance with the invention, the charging station acquires information for identifying the vehicle using communication between the charging station and the vehicle. For example, the vehicle may transmit a unique identifying number to the charging station. To enable the transmission of a signal comprising a unique identification number, the vehicle may comprise a transmitter or transceiver within an 'on board unit' (OBU). The communication may comprise a Cooperative Intelligent Transport Systems (C-ITS) message, using ETSI-G5 or Cellular V2X technologies, which includes information which may uniquely identify the vehicle. Alternatively such communications are dedicated short-range communications e.g. following the European Committee for Standardisation (CEN) dedicated short range communication (DSRC) standard. CEN DSRC is specifically designed for automotive use with specific sets of protocols and standards. CEN DSRC may help to provide a cryptographically secure communication and infrastructure that supports handling monetary transactions, and fulfils non-repudiation requirements. The OBU would then be one compatible with CEN DSRC.

The charging station therefore comprises a transceiver (e.g. CEN DSRC transceiver) arranged to receive a signal (e.g. a CEN DSRC signal) from a vehicle. The transceiver may comprise part of a 'road side unit' (RSU) which is arranged to communicate with the OBU in the vehicle. The transceiver may be arranged such that it only receives a signal from a vehicle when the vehicle is within a predetermined distance (limited by the range of communication signals) of the receiver. In a set of embodiments, the charging station and vehicle participate in two-way communications - and thus preferably the charging station and the vehicle each comprise a transceiver such as a CEN DSRC transceiver.

Typically the data received from the OBU (e.g. by the RSU) comprises a unique serial number, but it may also contain more detailed information about the vehicle such as license plate number, model and charging technology.

The arrangement of receivers, transmitters and/or transceivers allows a polling operation to be performed and thus, information for identifying the vehicle is acquired using a polling operation. The polling operation may comprise transmitting a polling signal from the charging station (e.g. the RSU) and receiving a response signal transmitted by the vehicle (e.g. transmitted from the OBU) at the charging station. Preferably the response signal comprises information identifying the vehicle. This process may help to conserve the power source (e.g. battery) of a transceiver in the vehicle, as the transceiver need not transmit a signal unless it receives the polling signal from the charging station (e.g. the transceiver is not required to transmit a signal continually).

In accordance with the invention, the charging station transmits a first set of polling signals at a first rate; transmits a second set of polling signals at a second, lower rate upon detecting the presence of a vehicle; and acquires the information for identifying the vehicle from a signal received in response to at least one of said polling signals.

By reducing the rate of transmission of polling signals once a vehicle has been detected by the sensor, the number of times that a device in the vehicle is required to respond may be reduced, which may help to conserve battery levels in such devices whilst the vehicle is in the predetermined area in a vicinity of the charging device.

The second rate could be zero but in a set of embodiments it is non-zero. This reflects the Applicant's recognition that it is likely to be beneficial to check periodically that the same vehicle is still present. In a set of embodiments, the first rate is in the range of every 1 to every 200 milliseconds, e.g. every 5 to 100 milliseconds, e.g. every 10 to 20 milliseconds. In a set of embodiments, the second rate is in the range of every 10 seconds to 300 seconds, e.g. every 30 seconds to 180 seconds, e.g. every 60 seconds.

The response to the polling signal may, as previously outlined, comprise a Cooperative Intelligent Transport Systems (C-ITS) message, using ETSI-G5 or Cellular V2X technologies, which includes information which may uniquely identify the vehicle. Alternatively the response may be dedicated short-range communication e.g. following the European Committee for Standardisation (CEN) dedicated short range communication (DSRC) standard.

The charging station may be arranged such that it only transmits a polling signal which can be received by a vehicle when the vehicle is within a predetermined distance (limited by the range of the polling signals) of the transceiver. For example one or both of the first set of polling signals transmitted and the second set of polling signals may be low power signals. For example the power level used could be 13dBm effective isotropic radiated power (EIRP) compared to a nominal power level of 33dBm for a standard CEN DSRC transceiver. This may help to ensure that only vehicles present in a predetermined area in a vicinity of the charging device receive the first set of polling signals and the second set of polling signals, and are therefore required to transmit a signal in response. Furthermore in some regulatory regimes such a lower power may also allow less restricted use of the radio spectrum. The transmission power of the first and seconds sets of polling signals could be different - e.g. the transmission power of the second set may be lower as it is known that a vehicle is parked.

Each signal of the first set of polling signals and of the second set of polling signals may comprises any suitable waveform(s). Each signal may comprise a burst comprising a plurality of frequencies. In embodiments in which the transceivers in the charging station and the vehicle are DSRC transceivers, the frequencies of the signals are in the 5.8 GHz band. The signals of the first and second sets of polling signals could be different from each other but preferably they are the same.

Similarly to previously, the signal received in response to the polling signal may comprise a unique serial number, but it may also contain more detailed information about the vehicle such as license plate number, model and charging technology. In some embodiments the response signal includes information on the position of the vehicle and/or an OBU thereon. This may help to verify that the identifying information received is associated with a vehicle in the predetermined area in a vicinity of the charging device. For example, DSRC tags may be implemented to provide very precise positioning information. As will be familiar to those skilled in the art, CEN DSRC technology allows the DSRC transceiver to precisely position the DSRC tag within its detection field at least in the horizontal (x-y) plane.

Different information may be received from the vehicle depending on whether the vehicle is responding to one of the first set of polling signals or one of the second set of polling signals.

In all aspects of the invention preferably a or the OBU is permanently associated with and/or connected to the vehicle. For example, the OBU may be integrated into the vehicle using a tamper-proof mechanism. This decreases the risk that the acquired information for identifying the vehicle has been tampered with or altered, improving the reliability of the acquired information.

In a set of embodiments of any aspect of the invention, the presence of a vehicle in accordance with the invention is determined by receipt of a signal from the vehicle - e.g. the signal in response to one of the first set of polling signals. Upon receiving the response signal from the vehicle, the charging station may then begin transmitting the second set of polling signals at the second lower rate.

Even where the charging station is able to acquire identification information from the vehicle by transmitting polling messages in accordance with the invention, as described above, a further mechanism for identifying vehicles may be provided - e.g. for use where a vehicle is not fitted with a suitable transceiver, the battery thereof is depleted, or simply as a back-up where there is some other reason where polling an on-board tag or the like cannot be used. In a set of embodiments therefore, the charging station further comprises a camera for acquiring information for identifying the vehicle. This may have any of the features previously set out.

Similarly even where the charging station is able to determine presence of the vehicle by receiving a response to a polling message in accordance with the invention, in a set of embodiments a further mechanism for determining the presence of vehicles may be provided for use where a vehicle response cannot be received. The further mechanism could comprise ant of those previously outlined - e.g. a or the camera, a dedicated sensor etc.

The charging station in accordance with any aspect of the invention may seek to acquire information for identifying a vehicle all the time. For example the camera may continuously or frequently capture images, e.g. ten images per second and analyse these images for a license plate as frequently as images are captured. Identification of a vehicle could then act also as a determination of presence of a vehicle. Such a camera arrangement may also be used to identify whether a different vehicle (to the vehicle previously detected) is in the predetermined area in the vicinity of the charging device, as a different license plate number to that previously detected will be determined. This information may be communicated to the remote subsystem.

In another set of embodiments information for identifying the vehicle is sought if (e.g. if and only if) presence of a vehicle in a predetermined area in the vicinity of a charging device is detected - e.g. by a dedicated sensor or a different image processing mode for the camera. For example, detection of vehicle presence by an in-ground sensor may trigger the charging station to capture an image by the camera, listening for transmissions from the vehicle or send a polling transmission to the vehicle.

The charging station, e.g. a or the receiver forming part thereof, may be arranged to send the data received in the signal from the vehicle to an external server. The external server may then determine identifying information relating to the vehicle from the data included in the signal (e.g. if the data does not provide a unique identification number) and/or provide additional information relating to the vehicle (e.g. license plate number, model, age, user, tax registration). The external server may, for example, be one controlled by a vehicle licensing agency.

The one or more sensors arranged to detect presence of a vehicle in a predetermined area in a vicinity of the charging device may be arranged to communicate detection of the presence of a vehicle to another part of the charging station and/or directly to the authorisation server. The one or more sensors may be arranged to communicate only if presence of a vehicle is detected, e.g. the one or more sensors may not transmit information when a presence of a vehicle is not detected. This may help to extend battery life for battery operated sensors. Equally it could transmit periodic 'null' signals. However, preferably the one or more sensors are arranged to communicate only if the status of presence of a vehicle has changed, e.g. when a vehicle arrives at or leaves the charging station.

In embodiments in which the one or more sensors and another part of the charging station do not communicate directly, the charging station may comprise a parking gateway to relay information between the one or more sensors (using any of various radio technologies) and the charging station.

In a set of embodiments, the invention includes determining the authorisation status of a vehicle. This determination could be carried out by the authorisation server or by a separate system depending on the particular application and the rules that the operator wishes to implement.

A positive authorisation status indicates that the identified vehicle is authorised to use the charging device. If no positive authorisation status is received, or the authorisation status is indicated to be negative, in a set of embodiments electrical power is not supplied to the vehicle by the charging device. This may prevent vehicles from entering or remaining at a charging station that the vehicle is not authorised to use. This may help to avoid circumstances where an authorised vehicle is unable to use a charging station because the charging station is being used by an unauthorised vehicle.

In set of embodiments, an indication is provided when no positive authorisation status is received or the authorisation status is negative. Indicating, for example to the user of the detected vehicle, that the vehicle is not authorised to use the charging device may encourage the user to remove an unauthorized detected vehicle from the predetermined area in the vicinity of the charging device, leaving the charging station available to an authorised vehicle. This may help increase the confidence and certainty of users of the availability of a charging station for their vehicle when an authorisation to use a charging station has been received.

An identical or similar indication may also be provided when the charging station cannot acquire identifying information from a vehicle.

The indication may be provided in any suitable and desirable manner. For example, the indication may be provided by a device (e.g. belonging to the user of a vehicle), such as a mobile phone, or by the vehicle itself. However, preferably the indication is provided by the charging station. Therefore, in a set of embodiments the charging station comprises an indicator. For example, an indication light may flash red when a detected vehicle is not authorised to use the charging device (i.e. the authorization status is not positive) and/or a sound or voice response may be given. The indicator may be located on the charging device.

The authorisation server may determine an authorisation status using a database. For example, the database may contain only identifying information for authorised vehicles. In such arrangements if the authorisation server, when provided with identifying information for a detected vehicle, locates the identification information in the database it determines the vehicle to be authorised, and the authorisation server generates a positive authorisation status. However if the authorisation server, when provided with identifying information, does not locate the identification information in the database it determines the vehicle to be unauthorised and the authorisation server generates a negative authorisation status. Alternatively, the database may comprise identifying information for more vehicles (e.g. it may comprise all officially registered vehicles or may be limited to registered electric vehicles) and an authorisation status corresponding to each vehicle.

The database may comprise a 'blacklist' of vehicles denied access to charging stations. In such embodiments, should the identifying information relate to a vehicle on the 'blacklist' then the vehicle is determined to be unauthorised and the authorization server generates a negative authorisation status.

The authorisation status of a given vehicle may be static e.g. in a subscription model where subscribed vehicles may be authorised to use any of the organisation's charging stations at any time. In other models, there may be restrictions on time and location. An important example of this would be a reservation model which would allow a specific vehicle to reserve a specific charging station at a specific time.

The authorisation server may thus receive a request for authorisation for a charging station. A vehicle or user of a vehicle may request authorisation for (e.g. access to) one or more charging stations. This request may be made through a software application e.g. installed on a mobile phone. The request may be for authorisation for any (e.g. currently available) charging stations within a certain area (for example within a 5 km radius from the current location of the vehicle) and/or at certain location (for example an office complex or supermarket). The request may also be for a charging station compatible with the charging technology of the vehicle.

If a suitable charging station (e.g. within a specified area and/or at a specified location, compatible with the charging technology of the vehicle) is available (e.g. another vehicle is not already authorised and/or using the suitable charging station), the authorisation server may authorise the vehicle (to use the charging station). In a set of embodiments, a signal is sent to the reserved charging station and preferably an alert is provide indicating that the charging station has been reserved. The alert may be provided by an indicator on the charging station. This may discourage unauthorised vehicles from entering a reserved space. For example, an indicator light on the charging station may flash yellow to indicate that the charging station has been reserved.

The vehicle may then be assigned a positive authorisation status for the selected suitable charging station. In a set of embodiments the charging system comprises a reservation server which manages reservations. This could be part of the authorisation server or could be separate but store an authorisation status in the databased accessed by the authorisation server.

Whilst in some embodiments a vehicle may be assigned a positive authorisation status for a plurality of charging stations, preferably a vehicle is assigned a positive authorisation status for only one charging station. This may allow charging stations to be allocated more efficiently.

After electrical power has been supplied to the vehicle for a period of time the vehicle may become fully charged or sufficiently charged e.g. for the vehicle to continue its journey to a destination. Whilst the vehicle may be assumed to be completely charged after a certain time period has elapsed from the commencing of charging, in a set of embodiments the charging station determines whether the vehicle has completed charging. The determination that the vehicle has completed charging can be performed in any suitable and desirable manner. For example, the charging device may be arranged to determine when the vehicle has completed charging. The determination could be made by monitoring physical characteristics of the charging process such a voltage, current, cumulative charge etc. Additionally or alternatively it could be based on a signal sent from the vehicle via the charging cable. Similarly such a signal could be transmitted independently e.g. through the same channel through which identifying information is sent.

The user may be alerted when the vehicle has been determined to have completed charging or after a certain time period has elapsed from commencing of charging. The user may, alternatively or additionally, be alerted when the vehicle has been determined to have completed charging and the presence of the vehicle is still, or again detected by the one or more sensors a predetermined time after charging is completed. The alert may be provided by a device (e.g. belonging to the user of a vehicle) such as a mobile phone, by the vehicle itself or by an indicator. For example, an indication light may flash green after it has been determined that the vehicle has completed charging. The alert may encourage the vacation of the vehicle from the charging station once the vehicle has completed charging, allowing charging stations to be allocated more efficiently and increase availability of charging stations.

The charging station and/or system may be arranged to handle payments relating to the use of the charging station. In a set of embodiments, the identifying information is used to debit an associated account. This automated debiting using the identifying information enables automated payment transactions, e.g. not requiring the user of a vehicle to use a card machine at the charging station or enter credit/debit card information into an application installed on their phone. The charging system may comprise a payment system arranged to debit an account associated with the identification information.

An associated account may be debited for any desirable reason. For example, the associated account may be debited an amount associated with the cost of electrical power supplied to the vehicle by the charging device and/or the time over which electrical power is supplied to the vehicle. Debiting an associated account may be used as an enforcement means. The determination of whether an associated account should be debited may be performed by the payment system or an enforcement server. For example, the associated account may be debited an amount if the authorisation status is negative, if the presence of a vehicle is detected after it has completed charging and/or if the presence of a vehicle is detected by the one or more sensors after a predetermined period of time from the completion of charging. The amount debited may correspond to the time accrued during which the vehicle was detected by the one or more sensors and was not being supplied power by the charging device; this amount may be proportionally greater than the charge for the supply of electrical power or for the time during which electrical power is provided to the charging device. The user of a vehicle may be encouraged to remove their vehicle from the predetermined area in the vicinity of the charging device when the vehicle is not being charged or is not authorised to use a charging station if they are aware an additional fee will otherwise be incurred.

In a set of embodiments, the charging station comprises a remote subsystem. One or more of the following components (where provided) may form part of a remote subsystem: the database, the authorisation server, the reservation server, the payment system and the enforcement server. Locating one or more of these components in the same remote subsystem may simplify interactions between the various components.

Certain embodiments of the present invention will now be described, by way of example only, with reference to the accompanying drawings in which:
Figure 1 is a diagram of a charging station and a vehicle;
Figure 2 is a block diagram of various components of a charging system and a vehicle;
Figure 3 is a diagram showing the interaction of a mobile device with a reservation server;
Figure 4 is a flow chart of the method of reserving a charging station; and
Figure 5 is a flow chart of a method of controlling the charging of a vehicle in a charging system described for reference purposes only; and
Figure 6 is a flow chart of a method of acquiring information from a vehicle in a charging system in accordance with the invention.

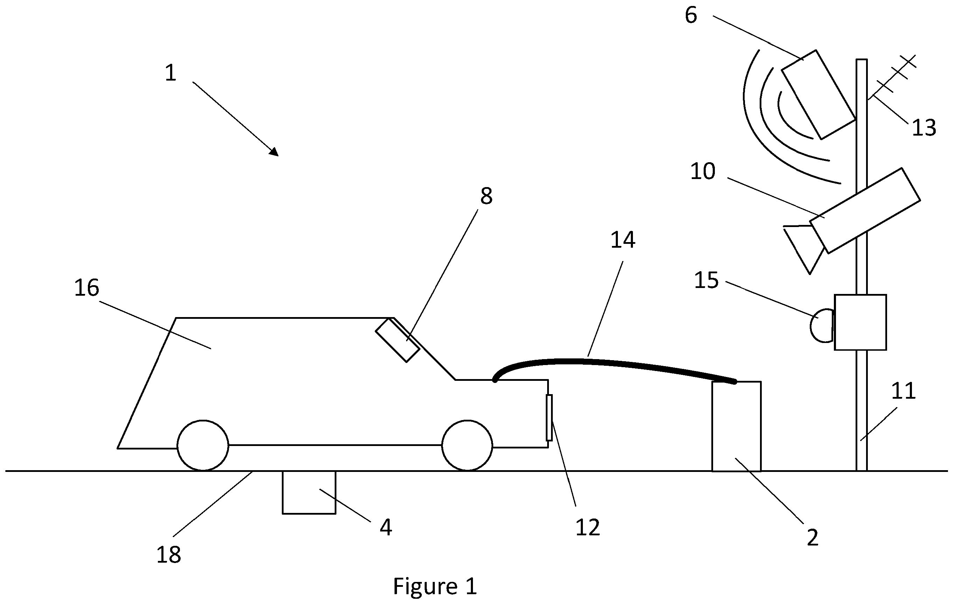

Figure 1 is a diagram showing various features of a charging station 1. The charging station 1 includes a charging device 2 which is arranged to provide electrical power to a vehicle 16. The charging device 2 includes a charging cable 14. The charging cable 14 can be connected to a vehicle 16, allowing electrical power to flow from the charging device 2 to the vehicle 16. This electrical power is used to charge a battery or batteries of the vehicle 16.

The charging station 1 also comprises a sensor 4. The sensor 4 is installed flush with the ground of a parking space 18 in the vicinity of the charging device 2. When a vehicle 16 is positioned above the sensor 4 (i.e. when a vehicle 16 occupies the parking space 18 in the vicinity of the charging device 2), the sensor 4 senses the presence of the vehicle 16. In particular in this embodiment the sensor 4 comprises an ultra-wide band radar transceiver, and determines a vehicle 16 to be present when the ultra-wide band transceiver detects a reflected ultra-wideband signal. In other embodiments the sensor 4 may comprise a magnetometer.

The charging station 1 includes a camera 10 mounted on post 11. The camera 10 is positioned to enable the camera to obtain an image of the licence plate 12 of a vehicle 16 which occupies the parking space 18. A dedicated short range communication (DSRC) RSU transceiver 6 is also mounted to the post 11. The DSRC RSU transceiver 6 is arranged to transmit signals to and receive signals from a DSRC tag or on board unit (OBU) 8 installed in the vehicle 16.

An indicator light 15 also forms part of the charging station 1. This is shown mounted to the post 11 but could equally be attached to the charging device or a separate post. The indicator light 15 provides an alert indicating that a vehicle 16 occupying the parking space 16 is authorized to use the charging station 1, or alternatively indicating that a vehicle 16 is not authorized to use the charging station 1. For example, the indicator light 15 may be green if a vehicle 16 is authorized and flash red if a vehicle 16 is not authorised. The indicator light 15 may also provide an indication that a vehicle 16 has completed charging or that the charging station has been reserved.

The charging station 1 includes a transceiver 13 which enables the charging station to communicate information, e.g. to remote subsystems and servers. This communication could alternatively occur through a wired connection or network.

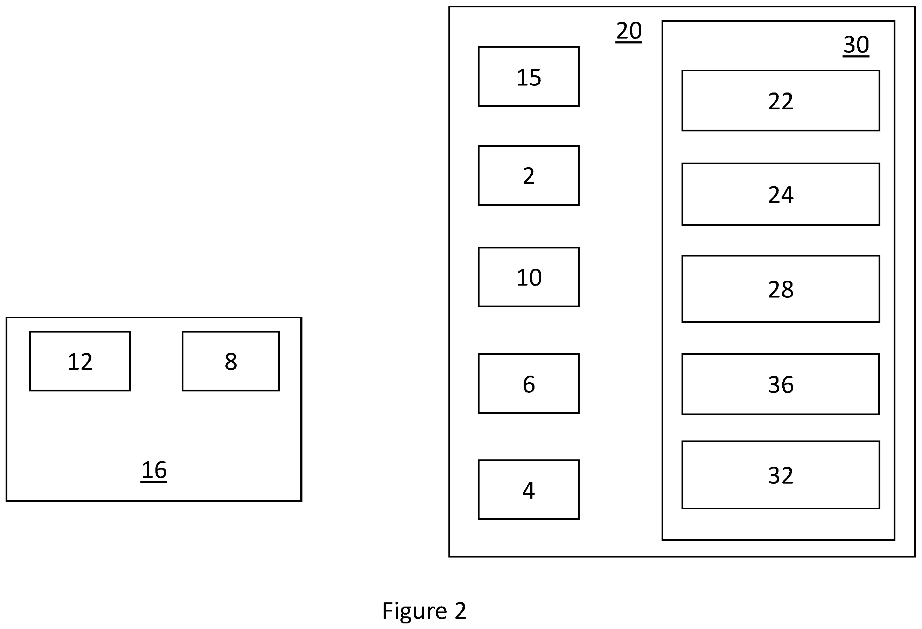

Figure 2 is a block diagram showing components of the charging system 20 and a vehicle 16. As seen in Figure 2, the vehicle 16 has both a license plate 12 and a DSRC tag 8, which are used to identify the vehicle.

The charging system 20 comprises the various features of the charging station 1 shown in Figure 1, namely a charging device 2, a sensor 4, a DSRC RCU transceiver 6, a camera 10 and an indicator light 15.

The charging system 20 also comprises a remote subsystem 30.

The remote subsystem 30 includes an authorisation server 24 and a database 22. The database 22 contains identifying information for a plurality of vehicles (license plate number and/or the unique identification numbers) and the authorisation status corresponding to each of these vehicles. The authorisation server 24, having received identifying information (e.g. the license plate number and/or the unique identification number), can determine the corresponding authorisation status of the vehicle 16 identified using the database 22.

Whilst only one charging station 1 is shown in Figure 1 and Figure 2, it is envisaged that a plurality of charging stations 1 may be located together. In such embodiments the charging system 20 may be formed of a plurality of charging stations 1 and the remote subsystem 30 (e.g. all the charging stations 1 may communicate with the same remote subsystem 30 via a common local hub).

In Figure 2, the remote subsystem 30 also comprises a reservation server 28. The reservation server 28 selects a suitable available charging station for a vehicle (e.g. once a user has made a request through an application on their mobile device) and authorises a vehicle to use this charging station at a specified time. The reservation server 28 may then store a positive authorisation status for the specified time in the database 22 associated with the license plate number and/or the unique identification number of the authorised vehicle 16 and the charging station location.

The remote subsystem 30 further includes a payment server 36 and an enforcement server 32. The payment server 36 handles payments relating to the use of the charging station 1, for example debiting an account associated with a license plate number and/or the unique identification number according to the cost of electrical power supplied to the vehicle 16 by the charging device 2. The enforcement server 32 determines whether an account should be debited as a form of enforcement e.g. if an unauthorised vehicle (i.e. a vehicle with a negative authorisation status) occupies the parking space 18 associated with the charging device 2. The enforcement server 32 may also determine the time accrued during which a vehicle 16 is detected by the sensor 4 and debit an account associated with the vehicle 16 should the vehicle 16 occupy the parking space 18 for too long (e.g. after the vehicle 16 has completed charging).

The charging station 1 and the remote subsystem 30 are arranged to communicate using the transceiver 13 forming part of the charging station 1 and a transceiver in the remote subsystem (not shown). The communications may be transmitted using a cellular network such as a long term evolution (LTE) network, e.g. a '4G' or '5G' network, as specified by 3GPP, or by wired networks.

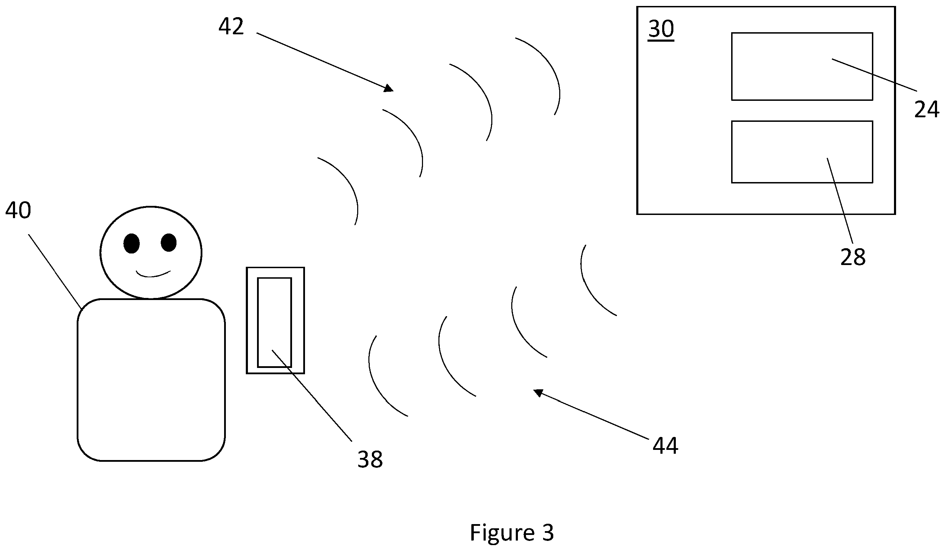

Figure 3 is a diagram showing the interaction of a mobile device 38 with the remote subsystem 30. The mobile device 38 belongs to a user 40. The user 40 uses an application on the mobile device 38 to request access to a charging station 1. The mobile device 38 and the remote subsystem 30 communicate via messages 42, 44. In practice these messages will be sent via a mobile data network and the internet. As explained above the reservation server 28 and the authorisation server 24 form part of the remote subsystem 30 (the rest of which is omitted for clarity).

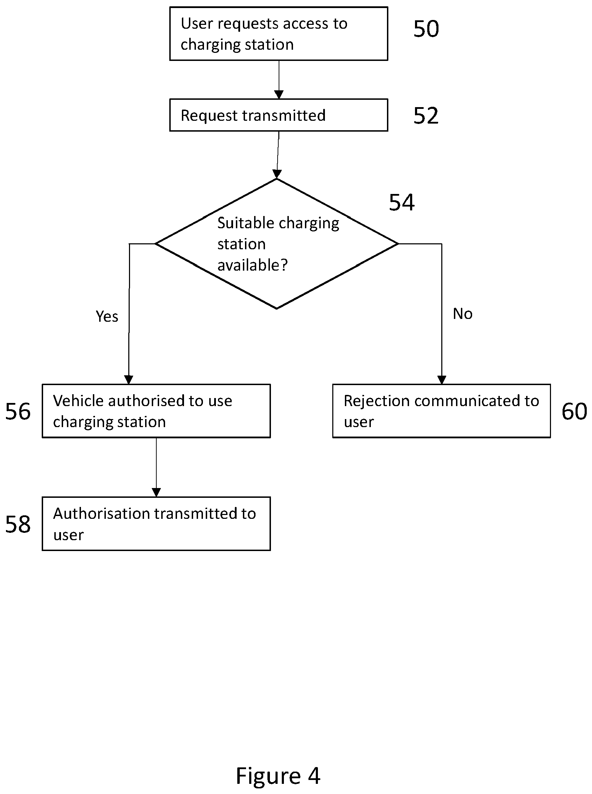

Figure 4 is a flow chart demonstrating how a user 40 can use a mobile device 38 to reserve a charging station 1. In step 50, the user 40 uses an application installed on the mobile device 38 to request access to a charging station 1 at a specified time (which could be immediate). For example, the user 40 may request access to a charging station 1 within a certain radius of a particular location or their current location. This request is transmitted by a message 42 from the mobile device 38 to the reservation server 28 in the remote subsystem 30 in step 52. The reservation server 28 performs a search upon receiving the message 42 from the mobile device 38 to determine whether a charging station 1 is or will be available (e.g. a charging station 1 not being used and not reserved for use by another vehicle/user) within the radius of the user's current location (step 54) or the user's travel destination where the reservation is for a future time). The reservation server 28 communicates with the authorisation server 24 to determine which charging stations 1 in the area have already been reserved for use by another vehicle.

If a suitable charging station compatible with the charging technology of the vehicle and available at the right time is found by the reservation server 28, the reservation server 28 authorises the user's vehicle to use this charging station 1 (step 56). This information is stored in the database 22 (not shown in Figure 3). If multiple charging stations 1 are available, the reservation server will select the closest charging station to the user's specified location (step not shown in flow chart) or may allow the user to choose location based on personal preferences. In step 58, the reservation server 28 transmits a message 44 to the mobile device 38 to confirm which charging station 1 has been reserved for the vehicle 16, associated with the user 40.

If a suitable charging station 1 is not found by the reservation server 28, the reservation server 28 communicates this information via signal 44 to the mobile device 38 (step 60). The user 40 may then, for example, select a wider radius of their current location, or a different future destination or time, and the method may begin again.

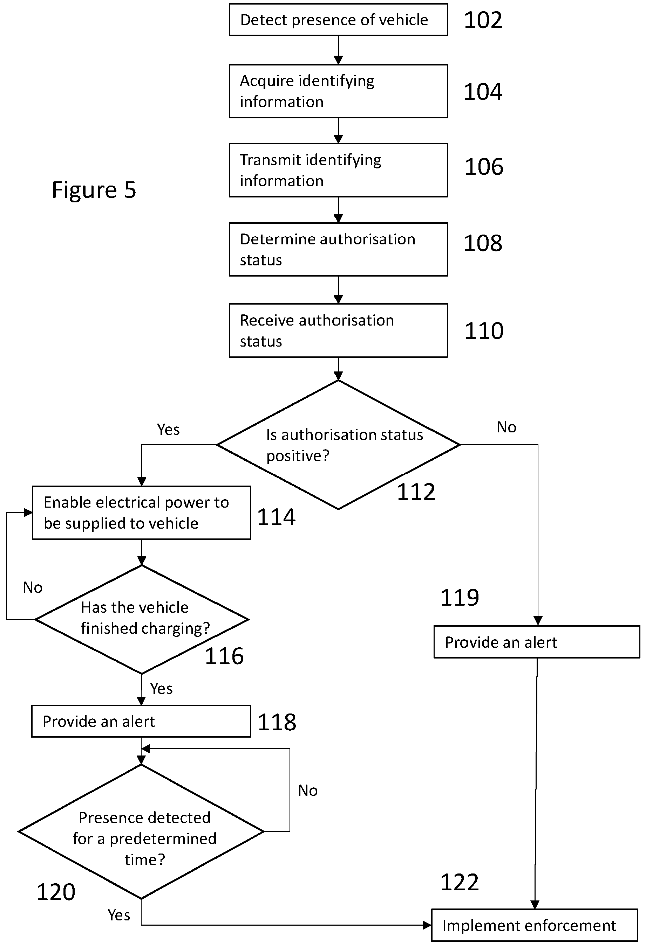

Figure 5 is a flow chart demonstrating a method for controlling the charging of a vehicle 16 at a charging station 1 described for reference purposes only. The method shown in Figure 5 may be implemented using the charging system described in Figures 1 and 2, although it will be appreciated by the skilled person that the method may also be performed by any suitable embodiments of the charging station and/or charging system encompassed by the present invention.

To begin, the vehicle 16 is driven to and parked in the parking space 18 associated with a charging station 1. The indicator light 15 may be green indicating that the space 18 is available or flashing yellow to indicate that it is reserved. In step 102 the presence of the vehicle 16, in the parking space 18 associated with the charging station 1, is detected by the sensor 4. The sensor 4 then transmits a signal indicating that a vehicle 16 has been detected to the camera 10 and the DSRC RSU transceiver 6.

Step 104 comprises acquiring identifying information associated with the detected vehicle 16. This information is acquired using the camera 10 and the DSRC RSU transceiver 6. In another embodiment only one of these might be provided. In step 106, the identifying information (from the camera 10 and/or the DSRC RSU transceiver 6) is transmitted to the authorisation server 24.

Upon receiving the signal indicating that the sensor 4 has detected the presence of a vehicle, the camera 10 captures an image of the parking space 18 and therefore the vehicle 16 detected by the sensor 4. The image should contain identifying information in the form of the number plate of the vehicle 16. The camera 10 then uses an automated license plate recognition algorithm to determine the license plate number of the vehicle 16 in the parking space 18.

Simultaneously, the DSRC RSU transceiver 6 transmits a polling signal which is detected by the DSRC tag 8 in the vehicle 16. The DSRC RSU transceiver 6 then receives a response signal from the DSRC tag 8. The response signal contains a unique identification number of the vehicle 16. The identification number and other information transmitted from the DSRC tag 8 is secured by a cryptographic signature or message authentication code (MAC) procedure. The DSRC ecosystem has successfully handled financial transactions in toll systems world-wide and has proven to be secure and reliable.

The unique identification number of the vehicle 16 may be transmitted to an external server (for example a server of a regional/national vehicle authority), which may provide additional information based on the unique identification number transmitted in the response signal, e.g. on the model, owner, tax record of the vehicle, based on the unique identification number

In some embodiments, only one of the camera 10 and the DSRC RSU transceiver 6 is used to acquire identifying information. For example, the DSRC transceiver may only be used if the license plate number cannot be obtained using the camera 10 (e.g. if the license plate 12 is blocked from view of the camera 10 or the license plate is dirty or otherwise unreadable) or the camera may only be used if the vehicle doesn't have a DSRC tag. However, an advantage of acquiring identifying information using both the camera 10 and the DSRC RSU transceiver 6 if that the identification information acquired using the camera 10 and the DSRC RSU transceiver 6 can be compared with each other, providing verification that the identifying information required is accurate (e.g. the license plate 12 has not been tampered with or the tag 8 transferred to an unauthorised vehicle).

The identification information is also transmitted to the payment server 36 and the enforcement server 32. In step 108, the authorisation server 24 determines the authorisation status of the vehicle 16 using the identifying information and the database 22. The authorisation server 24 locates the identifying information in the database 22 to determine whether the vehicle has been assigned a positive authorisation status. If the identifying information is not found in the database 22, then the authorisation server 24 considers the authorisation status to be negative.

The authorisation server 24 may then communicate with the payment server 36 to check whether a valid account (e.g. with up to date and valid bank details) is associated with the identification information. Should a valid account be associated with the identifying information the payment server 36 may debit or credit check the associated account accordingly and the authorisation server 24 transmits the positive authorisation status.

The authorisation server 24 transmits the authorisation status and in step 110 the authorisation status is received by the charging station 1. In particular, the authorisation status may be transmitted to and received by the charging device 2 and/or the indicator light 15. The authorisation status may also be transmitted to the enforcement server 32. The enforcement server 32 may determine whether an account associated with the identifying information of a vehicle 16 with a negative authorisation status should be debited, e.g. for misusing the parking space 18.

The next steps in the method depend on whether the authorisation status is positive (step 112).

If the authorisation status is positive, then the charging device 2 is enabled to provide electrical power to the vehicle 16 via the charging cable 14. Enabling the provision of electrical power may comprise supplying electrical power to the charging device 2 and/or unlocking the charging cable 14 from a port in the charging device 2 so that the charging cable 4 can be connected to a charging port of the vehicle 16. The indicator light 15 emits a green light when the authorisation status is positive.

In step 116, the charging station 1 determines whether the vehicle 16 has been completely charged. This step may be performed by the charging device 2 e.g. by measuring the charging current. If the vehicle 16 has not been completely charged, supply of electrical power to the vehicle 16 continues. If the vehicle 16 has completed charging, then an alert is provided (step 118) by the indicator light emitting a flashing green light. The payment system 36 may also receive information from the charging device 2 regarding the amount of electrical power consumed by the vehicle 16 during charging. The payment system 36 uses this information to determine the amount to debit the account associated with the identifying information of the vehicle 16.

In step 120, the charging system 20 determines a time period over which the presence of a vehicle 16 has been detected by the sensor 4, such as the time period since the alert was provided in step 118 (i.e. the time period during which a vehicle 16 has occupied the parking space 18 associated with the charging station 1 after the vehicle 16 is fully charged).

If the presence of the vehicle 16 has been detected for more than a predetermined time in step 120, the enforcement server will debit the associated account of the vehicle as a fine for misusing the charging station 1. This will help to discourage users from using the parking space 18 associated with the charging station 1 if their authorised vehicle 16 is no longer being charged.

If the authorisation status is negative, in step 119 an alert is provided. In this situation, the charging device 2 is not enabled to provide power to the vehicle 16. The alert may take the form of the indicator light 15 emitting red light and/or flashing. Next, in step 120, the enforcement server will debit the associated account of the vehicle as a fine for misusing the charging station 1. This will help to discourage users from using the parking space 18 associated with the charging station if their vehicle 16 is not authorised.

At any point the camera 10 may determine that a vehicle has arrived, left or changed. Similarly the charging station 1 may determine that a vehicle has left if the DSRC RSU transceiver 6 is no longer receiving responses from a DRSC tag 8 which it had previously been in communication with.

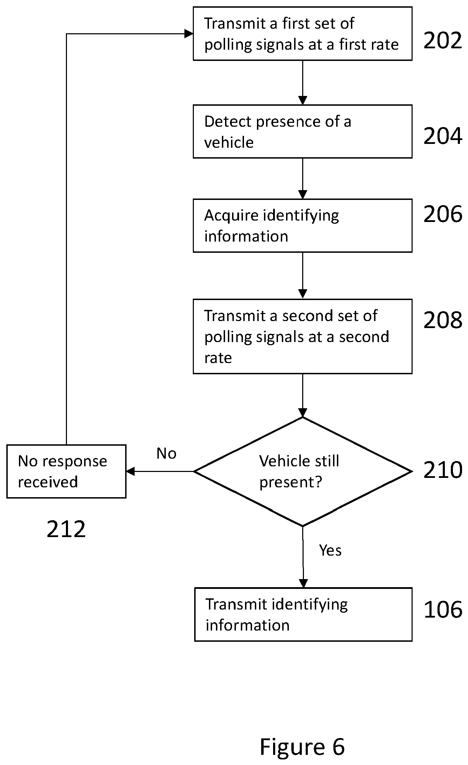

Figure 6 is a flow chart describing an alternative operation for acquiring identification information in accordance with the invention to replace steps 102 and 104 in the method shown in Figure 5. The method shown in Figure 6 may be implemented in any suitable embodiments of the charging station and/or charging system in accordance with the present invention.

To begin, at step 202 the charging station 1 transmits a first set of polling signals at a first rate, e.g. every 10 milliseconds. When the vehicle 16 is driven to and parked in the parking space 18 associated with the charging station 1, in step 204 the presence of the vehicle 16 is detected by the sensor 4. The sensor 4 then transmits a signal indicating that a vehicle 16 has been detected to the DSRC RSU transceiver 6.

In step 206, the DSRC RSU transceiver 6 receives a response signal from the DSRC tag 8. The response signal is transmitted in response to one of the first set of polling signals transmitted by the DSRC RSU transceiver 6. The response signal contains a unique identification number of the vehicle 16.

In step 208, upon receiving a signal from the sensor 4 that the vehicle has been detected, the charging station 1 begins transmitting a second set of polling signals at a second rate. The second rate is slower than the first rate, e.g. every minute. By decreasing the rate of polling of the DSRC tag 8, the DSRC tag 8 is woken up from a 'sleep state' in order to respond to the polling signal transmitted by the DSRC signal far less frequently. This reduces the energy consumption of the DSRC tag 8 whilst the vehicle is parked at the charging station 1, therefore conserving the battery life of the DSRC tag 8 such that the battery in the DSRC tag 8 does not need to be frequently replaced or recharged. However it still allows the charging station to confirm that the same vehicle remains present throughout. Both rate throttling and DSRC transceiver power control may be required to comply with radio spectrum regulatory requirements. Both may be controlled based on inputs from other sensors, e.g. the ultra-wideband in-ground sensor 4.

If, at step 210, the vehicle is still present (i.e. a response to a polling signal from the second set is received), the unique identification number of the vehicle 16 is, as before, transmitted to an external server (for example a server of a regional/national vehicle authority) in step 106, which may provide additional information based on the unique identification number transmitted in the response signal, e.g. on the model, owner, tax record of the vehicle, based on the unique identification number as described in relation to Figure 5. If no response is received at step 212, the charging station 1 reverts to transmitting the first set of polling signals at step 202.

It will be appreciated however that step 106 does not need to dependent on the DSCR transceiver beginning to transmit polling signals at the slower rate. In other words the identifying information may be transmitted immediately. Nonetheless the periodic determination of the continued presence of the vehicle represented by steps 210 and 212 may be carried out throughout the subsequent procedure.

In the example shown in Figure 6, the identifying information is transmitted by the DSRC tag 8 in response to one of the first set of polling signals. However, in other examples, the identifying information could be transmitted by the DSRC tag 8 in response to one of the second set of polling signals. In such an example, the steps of detection of the presence of the vehicle and transmission of the second set of polling signals would occur before the step of acquiring identification information.

Whilst the sensor 4 shown in Figures 1 and 2 is a dedicated sensor, it will be appreciated that the vehicle 16 could also be detected by a signal received by the DSCR RSU transceiver 6 from a DSRC tag 8. In such an example, the DSRC RSU transceiver 6 is the sensor configured to detect the presence of the vehicle 16.

It will also be appreciated that an apparatus configured to carry out the method described in the flowchart of Figure 6 does not need to include a camera. However, a camera is advantageous in embodiments in which it is possible to reserve a charging station for a vehicle that does not have a functioning OBU or otherwise for backup or verification. In such embodiments, identifying information for the vehicle can instead or additional be acquired from images obtained by the camera.

Thus it will be appreciated by those skilled in the art that the specific embodiments of the inventive concepts described herein provide apparatus, systems and methods for controlling the charging of a vehicle. It will be further appreciated that many variations of the specific arrangements described here are possible within the scope of the invention. For example, whilst embodiments have been described in which a ground-based sensor is used to detect presence of a vehicle, in other embodiments the camera may be arranged to detect presence of a vehicle (i.e. the camera may be used as a presence sensor forming part of the charging station).

## Claims

1. A charging station (1) for controlling charging of a vehicle (16) comprising:
a charging device (2);
a transceiver (6) arranged to transmit a first set of polling signals at a first rate; and
one or more sensors (4) arranged to detect presence of a vehicle (16) in a predetermined area in a vicinity of the charging device (2); **characterised in that**:
the charging station is arranged to transmit a second set of polling signals at a second, lower rate upon the detection of the presence of a vehicle (16), to acquire information for identifying the vehicle (16) from a signal received in response to at least one of said polling signals, communicate the identifying information to an authorisation server, receive an authorization status from the authorisation server and enable electrical power to be supplied to the vehicle (16) by the charging device (2) if the authorization status is positive.

2. A charging station as claimed in claim 1 arranged to determine a position of the vehicle (16) or of an on board unit (8) thereon using information included in the response signal.

3. A charging station as claimed in claim 1 or 2 wherein the one or more sensors (4) arranged to detect the presence of a vehicle (16) comprise the transceiver (6) or a further receiver for receiving a signal from the vehicle (16), and/or wherein the one or more sensors arranged to determine the presence of a vehicle (16) comprise a ground-based sensor (4) arranged to detect the presence of the vehicle (16) above the ground-based sensor (4).

4. The charging station as claimed in any preceding claim, wherein the one or more sensors arranged to detect the presence of a vehicle (16) comprise a camera (10) arranged to determine the presence in conjunction with image recognition.

5. The charging station as claimed in any preceding claim comprising a further mechanism for identifying vehicles; optionally wherein the further mechanism for identifying vehicles comprises a or the camera (10); and optionally wherein the camera (10) comprises a processor arranged to execute an algorithm to process images from the camera (10) to determine a license plate number.

6. The charging station as claimed in any preceding claim, arranged not to supply electrical power to the vehicle (16) by the charging device (14) if no positive authorisation status is received; and optionally comprising an indicator (15) arranged to provide an indication if no positive authorisation status is received, if the charging station cannot acquire adequate identifying information from the vehicle (16) and/or if the charging station has been reserved.

7. The charging station as claimed in any preceding claim, comprising a subsystem for determining whether a vehicle (16) has completed charging.

8. A method of controlling charging of a vehicle (16) at a charging station (1) comprising one or more sensors and a charging device (2), the method comprising the charging station:
transmitting (202) a first set of polling signals at a first rate;
detecting (204) presence of a vehicle (16) in a predetermined area in a vicinity of the charging device (2) using the one or more sensors; **characterised by**:
transmitting (208) a second set of polling signals at a second, lower rate upon detecting the presence of a vehicle;
acquiring (206) information for identifying the vehicle (16) from a signal received in response to at least one of said polling signals;
communicating (106) the identifying information to an authorisation server;
receiving (110) an authorisation status from the authorisation server; and enabling (114) electrical power to be supplied to the vehicle (16) by the charging device (2) if the authorisation status is positive.

9. The method as claimed in claim 8 comprising determining a position of the vehicle (16) or of an on board unit (8) thereon using information included in the response signal.

10. The method as claimed in claim 8 or 9 comprising at least one of:
determining (204) the presence of a vehicle (16) by receipt of a signal from the vehicle (16);
detecting (204) the presence of the vehicle above a ground-based sensor, wherein the one or more sensors comprise a ground-based sensor (4); and
detecting (204) the presence of the vehicle (16) in conjunction with image recognition, wherein the one or more sensors comprise a camera (10).

11. The method as claimed in any of claims 8 to 10, comprising acquiring (206) information for identifying the vehicle (16) using a or the camera (10) if no response signal is received.

12. The method as claimed in any of claims 8 to 11, comprising the one or more sensors communicating (118) detection of the presence of the vehicle (16) to another part of the charging station and/or directly to the authorisation server only if a status of presence of the vehicle (16) has changed.

13. The method as claimed in any of claims 8 to 12, further comprising not supplying electrical power to the vehicle (16) by the charging device (2) if no positive authorisation status is received; and optionally further comprising providing an indication (119) if no positive authorisation status is received, if the charging station cannot acquire adequate identifying information from the vehicle (16) and/or if the charging station has been reserved.

14. The method as claimed in any of claims 8 to 13, optionally further comprising any of:
determining (108) the authorisation status of the vehicle (16);
determining (116) whether the vehicle (16) has completed charging; and using the identifying information to debit an associated account.

15. A charging system (20) for controlling the charging of a vehicle (16) comprising:
a charging station (1) comprising a charging device (2), a transceiver (6) arranged to transmit a first set of polling signals at a first rate and one or more sensors arranged to detect presence of a vehicle (16) in a predetermined area in a vicinity of the charging device (2), **characterised in that**:
the charging station (1) is arranged to transmit a second set of polling signal at a second, lower rate upon detection of the presence of a vehicle (16) and to acquire information for identifying the vehicle (16) from a signal received in response to at least one of said polling signals; and the charging system comprises:
an authorisation server (24) arranged to receive identifying information, to determine an authorisation status of the vehicle (16) and transmit the authorisation status to the charging system (20);
wherein the charging station enables electrical power to be supplied to the vehicle (16) by the charging device (2) if the authorisation status is positive.

## Patentansprüche

1. Ladestation (1) zum Steuern des Ladens eines Fahrzeugs (16) umfassend:
eine Ladevorrichtung (2);
einen Transceiver (6), der so angeordnet ist, dass er einen ersten Satz Abfragesignale mit einer ersten Rate überträgt; und
einen oder mehrere Sensoren (4), die angeordnet sind, um die Anwesenheit eines Fahrzeugs (16) in einem vorbestimmten Bereich in der Nähe der Ladevorrichtung (2) zu erkennen; **dadurch gekennzeichnet, dass**: die Ladestation so angeordnet ist, dass sie bei dem Erkennen der Anwesenheit eines Fahrzeugs (16) einen zweiten Satz von Abfragesignalen mit einer zweiten, niedrigeren Rate überträgt, um Informationen zum Identifizieren des Fahrzeugs (16) aus einem als Antwort auf mindestens eines der Abfragesignale empfangenen Signal zu erwerben, die Identifizierungsinformationen an einen Autorisierungsserver weitergibt, einen Autorisierungsstatus vom Autorisierungsserver empfängt und die Bereitstellung elektrischer Leistung an das Fahrzeug (16) durch die Ladevorrichtung (2) ermöglicht, wenn der Autorisierungsstatus positiv ist.

2. Ladestation nach Anspruch 1, die angeordnet ist, um eine Position des Fahrzeugs (16) oder einer Bordeinheit (8) darauf zu bestimmen, unter Verwendung von Informationen, die im Antwortsignal eingeschlossen sind.

3. Ladestation nach Anspruch 1 oder 2, wobei der eine oder die mehreren Sensoren (4), die so angeordnet sind, dass sie die Anwesenheit eines Fahrzeugs (16) erkennen, den Transceiver (6) oder einen weiteren Empfänger zum Empfangen eines Signals vom Fahrzeug (16) umfassen, und/oder wobei der eine oder die mehreren Sensoren, die so angeordnet sind, dass sie die Anwesenheit eines Fahrzeugs (16) bestimmen, einen bodenbasierten Sensor (4) umfassen, der so angeordnet ist, dass er die Anwesenheit des Fahrzeugs (16) oberhalb des bodenbasierten Sensors (4) erkennt.

4. Ladestation nach einem vorstehenden Anspruch, wobei der eine oder mehrere Sensoren, die angeordnet sind, um die Anwesenheit eines Fahrzeugs (16) zu erkennen, eine Kamera (10) umfassen, die angeordnet ist, um die Anwesenheit in Verbindung mit der Bilderkennung zu bestimmen.

5. Ladestation nach einem vorstehenden Anspruch, die einen weiteren Mechanismus zum Identifizieren von Fahrzeugen umfasst; wahlweise, wobei der weitere Mechanismus zum Identifizieren von Fahrzeugen eine oder die Kamera (10) umfasst; und wahlweise, wobei die Kamera (10) einen Prozessor umfasst, der angeordnet ist, um einen Algorithmus zum Verarbeiten von Bildern von der Kamera (10) zum Bestimmen eines Kennzeichens auszuführen.

6. Ladestation nach einem vorstehenden Anspruch, die angeordnet ist, um das Fahrzeug (16) nicht mit elektrischer Leistung durch die Ladevorrichtung (14) zu versorgen, wenn kein positiver Autorisierungsstatus empfangen wird; und wahlweise umfassend eine Anzeige (15), die so angeordnet ist, dass sie eine Anzeige bereitstellt, wenn kein positiver Autorisierungsstatus empfangen wird, wenn die Ladestation keine ausreichenden Identifizierungsinformationen vom Fahrzeug (16) erwerben kann und/oder wenn die Ladestation reserviert wurde.

7. Ladestation nach einem vorstehenden Anspruch, umfassend ein Subsystem zum Bestimmen, ob ein Fahrzeug (16) einen abgeschlossenen Ladevorgang aufweist.

8. Verfahren zum Steuern des Ladens eines Fahrzeugs (16) an einer Ladestation (1), umfassend einen oder mehrere Sensoren und eine Ladevorrichtung (2), wobei das Verfahren die Ladestation umfasst:
Senden (202) eines ersten Satzes von Abfragesignalen mit einer ersten Rate;
Erkennen (204) der Anwesenheit eines Fahrzeugs (16) in einem vorbestimmten Bereich in der Nähe der Ladevorrichtung (2) unter Verwendung des einen oder der mehreren Sensoren; **gekennzeichnet durch**:
Übertragen (208) eines zweiten Satzes von Abfragesignalen mit einer zweiten, niedrigeren Rate beim Erkennen der Anwesenheit eines Fahrzeugs;
Erwerben (206) von Informationen zum Identifizieren des Fahrzeugs (16) aus einem Signal, das als Antwort auf mindestens eines der Abfragesignale empfangen wird;
Weitergeben (106) der Identifizierungsinformationen an einen Autorisierungsserver;
Empfangen (110) eines Autorisierungsstatus vom Autorisierungsserver; und Ermöglichen (114) der Versorgung des Fahrzeugs (16) mit elektrischer Leistung durch die Ladevorrichtung (2) bei positivem Autorisierungsstatus.

9. Verfahren nach Anspruch 8, umfassend das Bestimmen einer Position des Fahrzeugs (16) oder einer Bordeinheit (8) darauf unter Verwendung von Informationen, die im Antwortsignal eingeschlossen sind.

10. Verfahren nach Anspruch 8 oder 9, umfassend mindestens eines von:
Bestimmen (204) des Vorhandenseins eines Fahrzeugs (16) durch Empfangen eines Signals vom Fahrzeug (16);
Erkennen (204) der Anwesenheit des Fahrzeugs über einen bodenbasierten Sensor, wobei der eine oder die mehreren Sensoren einen bodenbasierten Sensor (4) umfassen; und
Erkennen (204) der Anwesenheit des Fahrzeugs (16) in Verbindung mit der Bilderkennung, wobei der eine oder mehrere Sensoren eine Kamera (10) umfassen.

11. Verfahren nach einem der Ansprüche 8 bis 10, umfassend das Erwerben (206) von Informationen zum Identifizieren des Fahrzeugs (16) unter Verwendung einer oder der Kamera (10), wenn kein Antwortsignal empfangen wird.

12. Verfahren nach einem der Ansprüche 8 bis 11, umfassend den einen oder die mehreren Sensoren, die das Erkennen der Anwesenheit des Fahrzeugs (16) an einen anderen Teil der Ladestation und/oder direkt an den Autorisierungsserver nur weitergeben (118), wenn sich ein Anwesenheitsstatus des Fahrzeugs (16) geändert hat.

13. Verfahren nach einem der Ansprüche 8 bis 12, weiter umfassend, dass das Fahrzeug (16) von der Ladevorrichtung (2) nicht mit elektrischer Leistung versorgt wird, wenn kein positiver Autorisierungsstatus empfangen wird; und wahlweise weiter umfassend das Bereitstellen einer Anzeige (119), wenn kein positiver Autorisierungsstatus empfangen wird, wenn die Ladestation keine ausreichenden Identifizierungsinformationen vom Fahrzeug (16) erwerben kann und/oder wenn die Ladestation reserviert wurde.

14. Verfahren nach einem der Ansprüche 8 bis 13, wahlweise weiter umfassend:
Bestimmen (108) des Autorisierungsstatus des Fahrzeugs (16);
Bestimmen (116), ob das Fahrzeug (16) eine abgeschlossene Ladung aufweist; und Verwenden der Identifizierungsinformationen, um ein verbundenes Konto zu belasten.

15. Ladesystem (20) zum Steuern des Ladens eines Fahrzeugs (16), umfassend:
eine Ladestation (1), umfassend eine Ladevorrichtung (2), einen Transceiver (6), der so angeordnet ist, dass er einen ersten Satz von Abfragesignalen mit einer ersten Rate überträgt, und einen oder mehrere Sensoren, die so angeordnet sind, dass sie die Anwesenheit eines Fahrzeugs (16) in einem vorbestimmten Bereich in der Nähe der Ladevorrichtung (2) erkennen, **dadurch gekennzeichnet, dass**:
die Ladestation (1) so angeordnet ist, dass sie bei der Erkennung der Anwesenheit eines Fahrzeugs (16) einen zweiten Satz von Abfragesignalen mit einer zweiten, niedrigeren Rate überträgt und Informationen zum Identifizieren des Fahrzeugs (16) aus einem als Antwort auf mindestens eines der Abfragesignale empfangenen Signal erwirbt; und das Ladesystem umfasst:
einen Autorisierungsserver (24), der so angeordnet ist, dass er Identifizierungsinformationen empfängt, einen Autorisierungsstatus des Fahrzeugs (16) bestimmt und den Autorisierungsstatus an das Ladesystem (20) überträgt;
wobei die Ladestation bei positivem Autorisierungsstatus die Bereitstellung elektrischer Leistung an das Fahrzeug (16) durch die Ladevorrichtung (2) ermöglicht.

## Revendications

1. Station de charge (1) pour la commande de charge d'un véhicule (16) comprenant :
un dispositif de charge (2) ;
un émetteur-récepteur (6) agencé pour transmettre un premier ensemble de signaux d'interrogation à une première cadence ; et
un ou plusieurs capteurs (4) agencés pour détecter la présence d'un véhicule (16) dans une zone prédéterminée à proximité du dispositif de charge (2) ; **caractérisée en ce que** :
la station de charge est agencée pour transmettre un deuxième ensemble de signaux d'interrogation à une deuxième cadence inférieure lors de la détection de la présence d'un véhicule (16), pour acquérir des informations d'identification du véhicule (16) à partir d'un signal reçu en réponse à au moins l'un desdits signaux d'interrogation,
communiquer les informations d'identification à un serveur d'autorisation, recevoir un état d'autorisation du serveur d'autorisation et permettre la fourniture d'une alimentation électrique au véhicule (16) par le dispositif de charge (2) si l'état d'autorisation est positif.

2. Station de charge selon la revendication 1 agencée pour déterminer une position du véhicule (16) ou d'une unité embarquée (8) sur celui-ci en utilisant des informations incluses dans le signal de réponse.

3. Station de charge selon la revendication 1 ou 2 dans laquelle les un ou plusieurs capteurs (4) agencés pour détecter la présence d'un véhicule (16) comprennent l'émetteur-récepteur (6) ou un autre récepteur pour recevoir un signal en provenance du véhicule (16), et/ou dans laquelle les un ou plusieurs capteurs agencés pour déterminer la présence d'un véhicule (16) comprennent un capteur (4) au sol agencé pour détecter la présence du véhicule (16) au-dessus du capteur (4) au sol.

4. Station de charge selon une quelconque revendication précédente, dans laquelle les un ou plusieurs capteurs agencés pour détecter la présence d'un véhicule (16) comprennent une caméra (10) agencée pour déterminer la présence conjointement avec une reconnaissance d'image.

5. Station de charge selon une quelconque revendication précédente comprenant un mécanisme supplémentaire d'identification de véhicules ; facultativement dans laquelle le mécanisme supplémentaire d'identification de véhicules comprend une ou la caméra (10) ; et facultativement dans laquelle la caméra (10) comprend un processeur agencé pour exécuter un algorithme de traitement d'images à partir de la caméra (10) pour déterminer un numéro de plaque d'immatriculation.

6. Station de charge selon une quelconque revendication précédente, agencée pour ne pas fournir d'alimentation électrique au véhicule (16) par le dispositif de charge (14) si aucun état d'autorisation positif n'est reçu ; et comprenant facultativement un indicateur (15) agencé pour fournir une indication si aucun état d'autorisation positif n'est reçu, si la station de charge ne peut acquérir d'informations d'identification adéquates à partir du véhicule (16) et/ou si la station de charge a été réservée.

7. Station de charge selon une quelconque revendication précédente, comprenant un sous-système permettant de déterminer si un véhicule (16) présente une charge complète.

8. Procédé de commande de charge d'un véhicule (16) au niveau d'une station de charge (1) comprenant un ou plusieurs capteurs et un dispositif de charge (2), le procédé comprenant la station de charge :
la transmission (202) d'un premier ensemble de signaux d'interrogation à une première cadence ;
la détection (204) de la présence d'un véhicule (16) dans une zone prédéterminée à proximité du dispositif de charge (2) en utilisant les un ou plusieurs capteurs ; **caractérisé par** :
la transmission (208) d'un deuxième ensemble de signaux d'interrogation à une deuxième cadence inférieure lors de la détection de la présence d'un véhicule ;
l'acquisition (206) d'informations permettant d'identifier le véhicule (16) à partir d'un signal reçu en réponse à au moins l'un desdits signaux d'interrogation ;
la communication (106) des informations d'identification à un serveur d'autorisation ;
la réception (110) d'un état d'autorisation en provenance du serveur d'autorisation ; et
la permission (114) de fourniture d'une alimentation électrique au véhicule (16) par le dispositif de charge (2) si l'état d'autorisation est positif.

9. Procédé selon la revendication 8 comprenant la détermination d'une position du véhicule (16) ou d'une unité embarquée (8) sur celui-ci en utilisant des informations incluses dans le signal de réponse.

10. Procédé selon la revendication 8 ou la revendication 9 comprenant au moins l'une parmi :
la détermination (204) de la présence d'un véhicule (16) par la réception d'un signal en provenance du véhicule (16) ;
la détection (204) de la présence du véhicule au-dessus d'un capteur au sol, dans lequel les un ou plusieurs capteurs comprennent un capteur (4) au sol ; et
la détection (204) de la présence du véhicule (16) conjointement à une reconnaissance d'image, dans lequel les un ou plusieurs capteurs comprennent une caméra (10).

11. Procédé selon l'une quelconque des revendications 8 à 10, comprenant l'acquisition (206) d'informations permettant d'identifier le véhicule (16) en utilisant une ou la caméra (10) si aucun signal de réponse n'est reçu.

12. Procédé selon l'une quelconque des revendications 8 à 11, comprenant les un ou plusieurs capteurs communiquant (118) la détection de la présence du véhicule (16) à une autre partie de la station de charge et/ou directement au serveur d'autorisation uniquement si un état de présence du véhicule (16) a changé.

13. Procédé selon l'une quelconque des revendications 8 à 12, comprenant en outre l'absence de fourniture d'alimentation électrique au véhicule (16) par le dispositif de charge (2) si aucun état d'autorisation positif n'est reçu ; et
comprenant en outre facultativement la fourniture d'une indication (119) si aucun état d'autorisation positif n'est reçu, si la station de charge ne peut acquérir d'informations d'identification adéquates en provenance du véhicule (16) et/ou si la station de charge a été réservée.

14. Procédé selon l'une quelconque des revendications 8 à 13, comprenant facultativement en outre au moins l'une parmi :
la détermination (108) de l'état d'autorisation du véhicule (16) ;
la détermination (116) si le véhicule (16) présente une charge complète ; et l'utilisation des informations d'identification pour débiter un compte associé.

15. Système de charge (20) pour la commande de la charge d'un véhicule (16) comprenant :
une station de charge (1) comprenant un dispositif de charge (2), un émetteur-récepteur (6) agencé pour transmettre un premier ensemble de signaux d'interrogation à une première cadence et un ou plusieurs capteurs agencés pour détecter la présence d'un véhicule (16) dans une zone prédéterminée à proximité du dispositif de charge (2), **caractérisé en ce que** :
la station de charge (1) est agencée pour transmettre un deuxième ensemble de signaux d'interrogation à une deuxième cadence inférieure lors de la détection de la présence d'un véhicule (16) et pour acquérir des informations d'identification du véhicule (16) à partir d'un signal reçu en réponse à au moins l'un desdits signaux d'interrogation ; et le système de charge comprend :
un serveur d'autorisation (24) agencé pour recevoir des informations d'identification, pour déterminer un état d'autorisation du véhicule (16) et transmettre l'état d'autorisation au système de charge (20) ;
dans lequel la station de charge permet la fourniture d'une alimentation électrique au véhicule (16) par le dispositif de charge (2) si l'état d'autorisation est positif.
